# EUROPEAN PATENT SPECIFICATION

(11) **EP 1 582 412 B1**
(45) Date of publication and mention of the grant of the patent: **30.05.2007**
(21) Application number: 04031012.0
(22) Date of filing: 30.12.2004
(51) Int. Cl.: B60R 13/04, B60J 10/00

(54) **A protective element for the bodies of commercial vehicles**
Schutzelement für Nutzfahrzeugkarosserie
Elément de protection pour la carrosserie de véhicules commerciales

(30) Priority: 02.04.2004 IT VR20040049
(43) Date of publication of application: 05.10.2005
(73) Proprietor: Natali, Gianfranco, 6924 Sorengo (CH)
(72) Inventor: Natali, Gianfranco, 6924 Sorengo (CH)
(74) Representative: Ponchiroli, Simone

(56) References cited:
- EP-A- 1 060 927
- FR-A- 2 517 010
- GB-A- 2 078 620
- US-A- 3 641 707
- US-A- 4 587 762
- US-A- 4 830 898
- US-A- 5 741 573

## Description

The present invention relates to a commercial vehicle body according to the preamble of claim 1, and a commercial vehicle according to the preamble of claim 13.

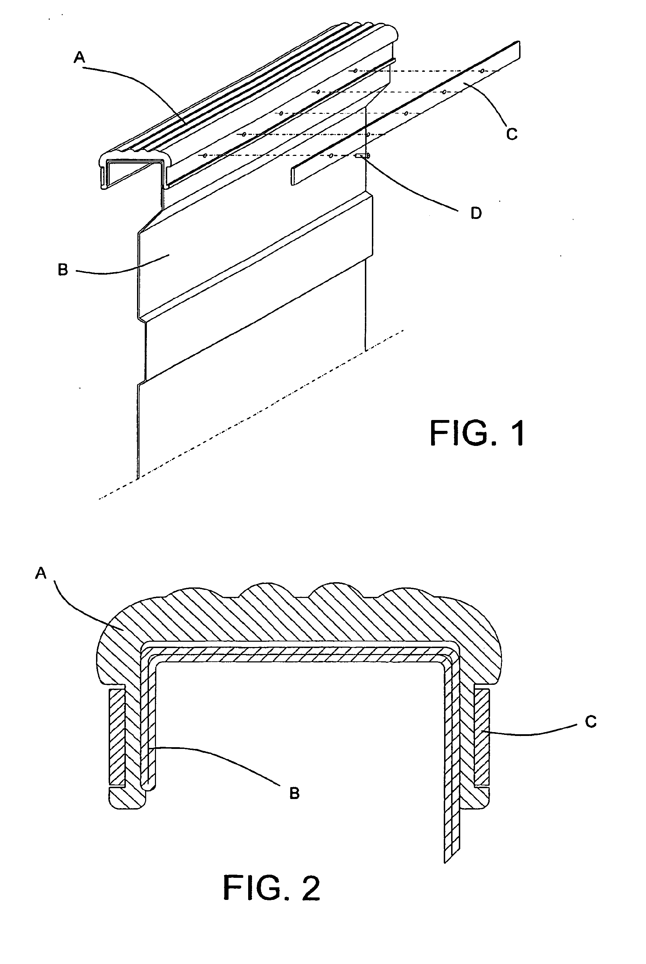

At present protective elements A normally consist of a an inverted U-shaped element with an upper wall and two side walls extending downwards on both sides of the upper wall (Figures 1 and 2).

All of the walls are made of a single, soft material (such as rubber).

The protective element A is shaped to match the upper edge of the element B to which it is applied (for example, the cab guard) preferably by means of two rigid plates C placed over the two side walls at two respective housings (Figure 2) and connected to the element B with rivets D or screws passing through the protective element A.

There are also other embodiments in which the upper wall of the protective element is directly fixed to the element B by screws or bolts.

However, this known technology has several disadvantages.

Connection of the protective elements to the side panels, the cab guard or the pole rack is complex (due to the need to use rivets or screws) and time-consuming, with a consequent negative effect on production costs.

With regard to this, it should be noticed that the known protective elements cannot even be glued. If they were glued, a check would be required to ensure that the glue acted on all of the walls of the protective element A and in particular between its side walls and the side panel, the cab guard or the pole rack. If not, due to the high level of flexibility of the protective element, the side walls would tend to become detached within a short time.

Therefore, with the current protective elements, gluing is not advisable, since it would require significant care during implementation (with a consequent increase in assembly times) otherwise the finished product would not last long.

Furthermore, US 5, 741, 573 discloses a pinch welt for trimming a flange formed on a vehicle body panel. The welt includes a rigid insert made of a thermoplastic or synthetic rubber material that is compatible with the material of an outer decorative layer of the welt so as to allow the pinch welt to be readily recyclable as a single unit after use.

The material of the insert has a resilience that allows the welt to be readily secured to the flange in a resilient manner. The insert is shaped by cooperating continuous forming rolls in an extrusion process that provides oppositely extending tines in which a thin webbing is formed between the tines.

In this situation the technical need which forms the basis of the present invention is to provide a commercial vehicle body with a protective element which overcomes the above-mentioned disadvantages.

In particular the technical need of the present invention is to provide a protective element for the bodies of commercial vehicles which is easily and rapidly fitted, yet guarantees optimum durability over time.

The technical need specified and the aims indicated are substantially achieved by a commercial vehicle body and a commercial vehicle as defined in the claims.

Further features and the advantages of the present invention are more clearly illustrated in the detailed description which follows, with reference to the accompanying drawings, which illustrate several preferred embodiments of a protective element for the bodies of commercial vehicles, without limiting the scope of the inventive concept, in which:
- Figure 1 is a partly exploded axonometric view of a side panel fitted with a protective element made according to the prior art;
- Figure 2 is a cross-section of a detail of a side panel fitted with a protective element made according to the prior art;
- Figure 3 is a cross-section of a protective element made according to the present invention;

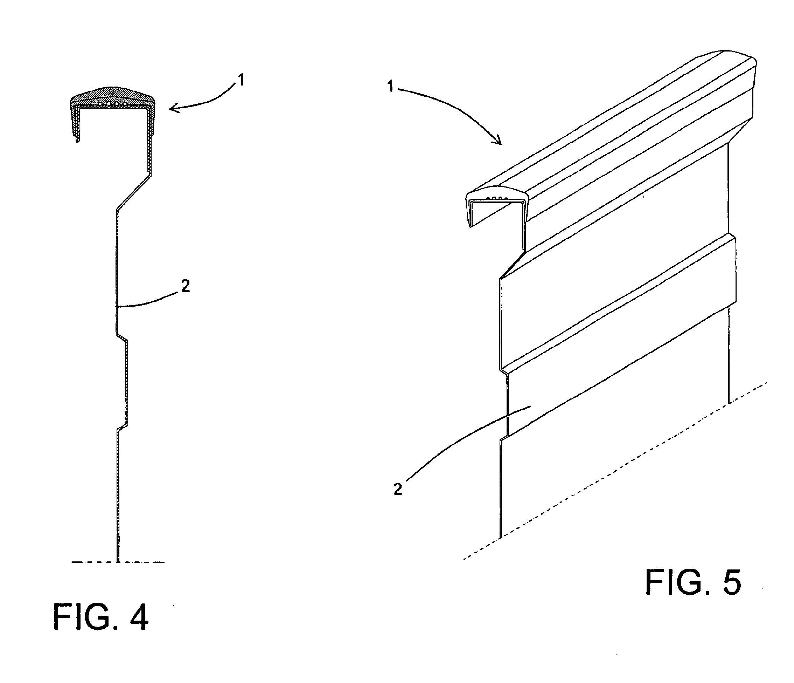

- Figure 4 is a view of the protective element illustrated in Figure 3 applied to a side panel of a body of an commercial vehicle schematically illustrated;
- Figure 5 is an axonometric three-quarter view of the side panel illustrated in Figure 4; and
- Figure 6 is a cross-section of the protective element illustrated in Figure 3 fitted on a side panel of a body.

With reference to the accompanying drawings, the numeral 1 denotes as a whole a protective element for the bodies of commercial vehicles according to the present invention.

The protective element 1 has, perpendicular to its main direction of extension (which in use coincides with the main direction of extension of the side panel 2, the cab guard or the pole rack), an inverted U-shaped cross-section and comprises a semi-rigid base element 3 with an inverted U-shaped cross-section, and a soft upper element 4 integral with an upper portion of the base element 3.

Advantageously, the upper element 4 is made of soft PVC, whilst the base element 3 is made of semi-rigid PVC.

According to the preferred embodiments, the join between the base element 3 and the upper element 4 may be obtained either by coextrusion of both, or by subsequently gluing them together.

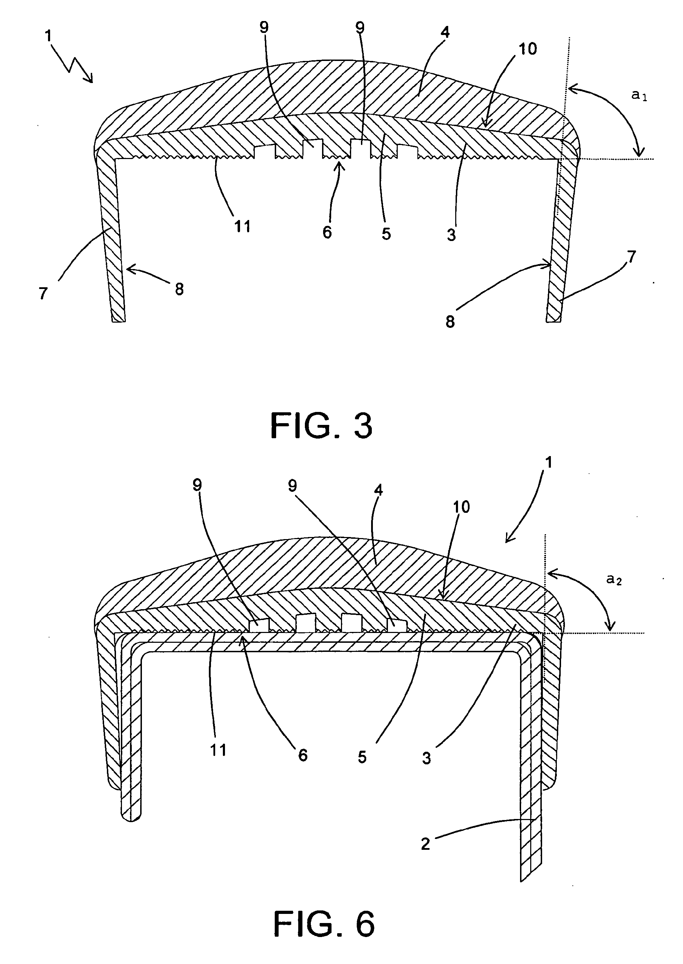

As illustrated in Figure 3, the base element 3 comprises an upper wall 5 having a lower surface 6 which connects to a side panel 2, and two side walls 7 integral with the upper wall 5 and extending downwards from the upper wall 5.

The side walls 7 in turn each have an inner connecting surface 8.

Both the upper wall 5 and the side walls 7 extend along the main direction of extension.

In the preferred embodiment, the side walls 7, in the home position, are angled towards one another, starting at the upper wall 5. They form an angle a₁ to the horizontal plane formed by the lower surface 6 of the upper wall 5.

The base element 3 is flexible enough to allow variations in the angle of the side walls 7 to the upper wall 5, by elastic bending of the side walls 7 relative to the upper wall 5.

Said elastic deformation allows the two side walls 7 to be widened at the moment of inserting the protective element 1 on the upper part of the side panel 2.

When the two side walls 7 are released they tend to return to the home position and grip the side panel 2 between them. Therefore, once fitted, the two side walls 7 form an angle a₂ to the upper wall 5 that is greater than the above-mentioned angle a₁.

Advantageously, the lower connecting surface 6 is knurled and has a plurality of recesses 9 which extend upwards.

As illustrated in Figure 3, the upper element 4 preferably completely covers the upper surface 10 of the upper wall 5, and, in cross-section, is thicker at the centre than at the two sides.

Moreover, the upper element 4 preferably also extends even for a short distance over the side walls 7.

The protective element 1 disclosed is preferably fixed to a side panel 2 of a body by simply inserting a layer of glue between the lower surface 6 of the based element 3 and the upper face of the side panel 2. The adhesion is strengthened by the knurling 11 of the lower surface 6.

In the embodiment illustrated, the recesses 9 in the lower surface 6 of the base element 3 have two functions: forming a reservoir for excess glue and guaranteeing the uniform thickness of the base element 3 during extrusion.

The present invention brings important advantages, since it allows the protective element to be fitted easily and rapidly by simply using glue. In any case, as already said, it may also be fixed in place with rivets.

Moreover, the shape and semi-rigidity of the protective element give the side panel an additional sealing element, and prevent the side walls from accidentally spreading apart as is the case with the protective elements currently used.

It should also be noticed that the present invention is relatively easy to produce and that even the cost linked to implementation of the invention is not very high.

The invention described may be subject to many modifications and variations, without thereby departing from the scope of the inventive concept.

All details may be substituted by other technically equivalent elements and in practice all materials used, as well as the shapes and dimensions of the various components, may be any according to requirements.

## Claims

1. A commercial vehicle body comprising at least a cab guard and/or a pole rack having an upper edge fitted with a protective element (1) which has,
perpendicular to its main direction of extension, an inverted U-shaped cross-section and a soft upper portion, the protective element (1) further comprising a base element (3) with an inverted U-shaped cross-section,
the base element (3) comprising an upper wall (5) having a lower surface (6) for connection to the cab guard and/or the pole rack, and two side walls (7) integral with the upper wall (5) and extending downwards from the upper wall (5), each of the side walls having an inner connecting surface (8), the upper wall (5) and the side walls (7) extending along the main direction of extension,
**characterized in that** the base element (3) is semi-rigid and **in that** the protective element (1) further comprises
a soft upper element (4) integral at least with an upper portion of the base element (3).

2. The commercial vehicle body according to claim 1, **characterised in that** the base element (3) and the upper element (4) are coextruded.

3. The commercial vehicle body according to claim 1 or 2, **characterised in that** the upper element (4) is made of soft PVC.

4. The commercial vehicle body according to claim 1, 2 or 3, **characterised in that** the base element (3) is made of semi-rigid PVC.

5. The commercial vehicle body according to any of the previous claims, **characterised in that** in the home position the side walls (7) are at an angle to one another starting at the upper wall (5), and also **characterised in that** the angle of the side walls relative to the upper wall (5) may be varied at least by bending the side walls (7) outwards relative to the upper wall (5).

6. The commercial vehicle body according to any of the previous claims, **characterised in that** the lower connecting surface (6) is knurled.

7. The commercial vehicle body according to any of the previous claims, or 7, **characterised in that** the lower wall has a plurality of recesses (9) which extend upwards.

8. The commercial vehicle body according to any of the previous claims, **characterised in that** the upper element (4) completely covers the upper surface (10) of the upper wall (5).

9. The commercial vehicle body according to claim 8, **characterised in that** the upper element (4) also extends over at least part of the side walls (7).

10. The commercial vehicle body according to any of the foregoing claims, **characterised in that**, in cross-section, the upper element (4) is thicker at the centre than at the two sides.

11. The commercial vehicle body according to any of the previous claims, **characterised in that** the protective element (1) is glued to the upper part of the side panel (2), cab guard and/or pole rack.

12. The commercial vehicle body according to any of the previous claims, **characterised in that** the protective element (1) is riveted directly to the side panel (2), cab guard and/or pole rack.

13. A commercial vehicle **characterised in that** it comprises a body according to any of the previous claims.

## Patentansprüche

1. Nutzfahrzeugkasten, enthaltend wenigstens eine Kabinenschutzwand und/oder einen Pfostenträger, dessen oberer Rand mit einem Schutzelement (1) versehen ist, welches lotrecht zu seiner Hauptausdehnungsrichtung einen umgekehrt U-förmigen Querschnitt und einen nachgiebigen oberen Abschnitt aufweist, wobei das Schutzelement (1) ausserdem ein Basiselement (3) von einem umgekehrt U-förmigen Querschnitt enthält, wobei das Basiselement (3) eine Deckenwand (5) mit einer unteren Fläche (6) für den Anschluss an die Kabinenschutzwand und/oder den Pfostenträger hat, sowie zwei Seitenwände (7), die mit der Deckenwand (5) fest verbunden sind und sich von der Deckenwand (5) aus nach unten erstrecken, wobei jede der Seitenwände eine interne Verbindungsfläche (8) hat, und wobei sich die Deckenwand (5) und die Seitenwände (7) entlang der Hauptausdehnungsrichtung erstrecken, **dadurch gekennzeichnet, dass** das Basiselement (3) halbstarr ist, und dadurch, dass das Schutzelement (1) ausserdem ein nachgiebiges oberes Element (4) aufweist, das mit wenigstens einem oberen Abschnitt des Basiselementes (3) fest verbunden ist.

2. Nutzfahrzeugkasten nach Patentanspruch 1, **dadurch gekennzeichnet, dass** das Basiselement (3) und das obere Element (4) in Koextrusion hergestellt sind.

3. Nutzfahrzeugkasten nach Patentanspruch 1 oder 2, **dadurch gekennzeichnet, dass** das obere Element (4) aus Weich-PVC hergestellt ist.

4. Nutzfahrzeugkasten nach Patentanspruch 1, 2 oder 3 **dadurch gekennzeichnet, dass** das Basiselement (3) aus halbstarrem PVC hergestellt ist.

5. Nutzfahrzeugkasten nach einem beliebigen der vorstehenden Patentansprüche, **dadurch gekennzeichnet, dass** die Seitenwände (7) in der Ruheposition zueinander hin angewinkelt sind, ausgehend von den Deckenwand (5), und auch dadurch, dass der Winkel der Seitenwände im Verhältnis zu der Deckenwand (5) wenigstens durch das Biegen der Seitenwände (7) nach aussen im Verhältnis zu der Deckenwand (5) verändert werden kann.

6. Nutzfahrzeugkasten nach einem beliebigen der vorstehenden Patentansprüche, **dadurch gekennzeichnet, dass** die untere Anschlussfläche (6) gerändelt ist.

7. Nutzfahrzeugkasten nach einem beliebigen der vorstehenden Patentansprüche, **dadurch gekennzeichnet, dass** die untere Wand eine Anzahl von Vertiefungen (9) aufweist, welche sich nach oben erstrecken.

8. Nutzfahrzeugkasten nach einem beliebigen der vorstehenden Patentansprüche, **dadurch gekennzeichnet, dass** das obere Element (4) vollkommen die obere Oberfläche (10) der Deckenwand (5) abdeckt.

9. Nutzfahrzeugkasten nach Patentanspruch 8, **dadurch gekennzeichnet, dass** sich das obere Element (4) ebenfalls über wenigstens einen Teil der Seitenwände (7) erstreckt.

10. Nutzfahrzeugkasten nach einem beliebigen der vorstehenden Patentansprüche, **dadurch gekennzeichnet, dass** im Querschnitt das obere Element (4) in der Mitte dicker ist als an den beiden Seiten.

11. Nutzfahrzeugkasten nach einem beliebigen der vorstehenden Patentansprüche, **dadurch gekennzeichnet, dass** das Schutzelement (1) an dem oberen Teil der seitlichen Spundwand (2), der Kabinenschutzwand und/oder des Pfostenträgers verklebt ist.

12. Nutzfahrzeugkasten nach einem beliebigen der vorstehenden Patentansprüche, **dadurch gekennzeichnet, dass** das Schutzelement (1) direkt an die Spundwand (2), die Kabinenschutzwand und/oder den Pfostenträger angenietet ist.

13. Nutzfahrzeug, **dadurch gekennzeichnet, dass** es einen Kasten nach einem beliebigen der vorstehenden Patentansprüche enthält.

## Revendications

1. Une carrosserie pour véhicules commerciaux comprenant au moins un protecteur de cabine et/ou un porte-poteaux ayant un bord supérieur équipé d'un élément de protection (1) qui a, perpendiculairement à sa direction de développement principale, une section transversale en U retourné et une partie supérieure souple, l'élément de protection (1) comprenant en outre un élément de base (3) ayant une section transversale en U retourné, ledit élément de base (3) comprenant une paroi supérieure (5) ayant une surface inférieure (6) pour l'accouplement avec le protecteur de cabine et/ou le porte-poteaux, et deux parois latérales (7) solidaires de la paroi supérieure (5) et s'étendant vers le bas à partir de ladite paroi supérieure (5), chacune des parois latérales ayant une surface intérieure (8) d'accouplement, la paroi supérieure (5) et les parois latérales (7) s'étendant le long de la direction de développement principale,
**caractérisée en ce que** l'élément de base (3) est semi-rigide et **en ce que** l'élément de protection (1) comprend en outre un élément supérieur souple (4) solidaire au moins d'une partie supérieure de l'élément de base (3).

2. La carrosserie pour véhicules commerciaux selon la revendication 1, **caractérisée en ce que** l'élément de base (3) et l'élément supérieur (4) sont coextrudés.

3. La carrosserie pour véhicules commerciaux selon la revendication 1 ou 2, **caractérisée en ce que** l'élément supérieur (4) est réalisé en PVC souple.

4. La carrosserie pour véhicules commerciaux selon la revendication 1, 2 ou 3, **caractérisée en ce que** l'élément de base (3) est réalisé en PVC semi-rigide.

5. La carrosserie pour véhicules commerciaux selon l'une quelconque des revendications précédentes, **caractérisée en ce que** les parois latérales (7), dans la position de repos, sont inclinées l'une vers l'autre à partir de la paroi supérieure (5), et également **caractérisée en ce que** l'inclinaison desdites parois latérales par rapport à la paroi supérieure (5) peut être modifiée au moins par flexion des parois latérales (7) vers l'extérieur par rapport à ladite paroi supérieure (5).

6. La carrosserie pour véhicules commerciaux selon l'une quelconque des revendications précédentes, **caractérisée en ce que** la surface inférieure (6) d'accouplement est moletée.

7. La carrosserie pour véhicules commerciaux selon l'une quelconque des revendications précédentes, **caractérisée en ce que** la paroi inférieure comporte une pluralité d'entailles (9) qui s'étendent vers le haut.

8. La carrosserie pour véhicules commerciaux selon l'une quelconque des revendications précédentes, **caractérisée en ce que** l'élément supérieur (4) couvre complètement la surface supérieure (10) de la paroi supérieure (5).

9. La carrosserie pour véhicules commerciaux selon la revendication 8, **caractérisée en ce que** l'élément supérieur (4) s'étend aussi sur au moins une partie des parois latérales (7).

10. La carrosserie pour véhicules commerciaux selon l'une quelconque des revendications précédentes, **caractérisée en ce que** l'élément supérieur (4), en coupe, est plus épais au centre que sur les deux côtés.

11. La carrosserie pour véhicules commerciaux selon l'une quelconque des revendications précédentes, **caractérisée en ce que** l'élément de protection (1) est collé à la partie supérieure du panneau latéral (2), du protecteur de cabine et/ou du porte-poteaux.

12. La carrosserie pour véhicules commerciaux selon l'une quelconque des revendications précédentes, **caractérisée en ce que** l'élément de protection (1) est directement riveté au panneau latéral (2), au protecteur de cabine et/ou au porte-poteaux.

13. Un véhicule commercial, **caractérisé en ce qu'**il comprend une carrosserie selon l'une quelconque des revendications précédentes.
